(19) Europäisches Patentamt
European Patent Office
Office européen des brevets

(11) Veröffentlichungsnummer: **0 345 649 B1**

(12) # EUROPÄISCHE PATENTSCHRIFT

(45) Veröffentlichungstag der Patentschrift: **23.10.91 Patentblatt 91/43**

(51) Int. Cl.[5]: **C08K 5/54**, C08J 3/24, C08G 69/48

(21) Anmeldenummer: **89109959.0**

(22) Anmeldetag: **01.06.89**

(54) **Verfahren zur Herstellung von vernetzten Polyamidformkörpern.**

(30) Priorität: **07.06.88 DE 3819428**

(43) Veröffentlichungstag der Anmeldung: **13.12.89 Patentblatt 89/50**

(45) Bekanntmachung des Hinweises auf die Patenterteilung: **23.10.91 Patentblatt 91/43**

(84) Benannte Vertragsstaaten: **CH DE ES FR GB IT LI**

(56) Entgegenhaltungen: **CH-A- 663 621**

(56) Entgegenhaltungen: **DE-A- 3 545 032**
**GB-A- 2 131 037**
**Patent Abstracts of Japan, Band 10, Nr. 103 (C-340) (2160), 18. April 1986**

(73) Patentinhaber: **EMS-INVENTA AG**
**CH-8001 Zürich (CH)**

(72) Erfinder: **Schmid, Eduard, Dr. sc. nat.**
**Valbeuna**
**CH-7402 Bonaduz (CH)**

(74) Vertreter: **Patentanwälte Deufel, Hertel, Lewald**
**Isartorplatz 6 Postfach 26 02 47**
**W-8000 München 26 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung vernetzter Polyamid-Formkörper.

In der DE-OS 3339981 wird die Umsetzung von linearen, unverzweigten Polyamiden aus Aminosäuren, Lactamen oder Diamin-Dicarbonsäuresalzen, Polyamiden, die zusätzlich aromatische Monomere enthalten, elastomeren Polyamiden mit Polyetherblöcken sowie Mischungen aus derartigen Polyamiden mit reaktionsfähigen Silanen zur Gewinnung von Gebrauchs gegenständen mit verändertem Eigenschaftsprofil beschrieben.

Die DE-PS 3545032 beschreibt ein spezifisches Verfahren zur Herstellung derartiger Polyamidformkörper, bei dessen Durchführung als Träger für das reaktive Silan Masterbatches verwendet werden, um die schwierige Dosierung und homogene Einarbeitung der Silane in die Polyamide, insbesondere nach dem Spritzgußverfahren, zu ermöglichen.

In der nicht vorveröffestlichten DE-PS-3819427 wird die gezielte Herstellung mehrfach verzweigter Polyamide aus Lactamen und/oder ω-Aminocarbonsäuren und verzweigend wirkenden Komponenten beschrieben. Diese Polyamide bestehen aus mehrfach verzweigten, einfach verzweigten und linearen Ketten. Ihre Endgruppen können gezielt vorgewählt werden.

Nachdem die Eigenschaften dieser neuen Polyamidtypen noch nicht allen Anforderungen genügen, wie sie beispielsweise zur Herstellung von Konstruktionsteilen, im Werkzeugbau, zur Herstellung besonders abriebfester Formteile, wie beispielsweise Kabelummantelungen oder solchen mit sehr hohen Fließfestigkeiten und Zähigkeiten, erfüllt werden müssen, hat sich die Erfindung die Aufgabe gestellt, Polyamid-Formkörper mit noch weiter verbesserten Eigenschaften zu schaffen.

Diese Aufgabe wird durch das Verfahren des Patentanspruchs 1 gelöst.

Die Erfindung beruht demgemäß auf der Feststellung, daß Polyamid-Formkörper, welche in der Weise hergestellt werden, daß Polyamide, die durch hydrolytische Polymerisation aus Lactamen und/oder ω-Aminocarbonsäuren mit 6 bis 12 Kohlenstoffatomen oder Gemischen davon hergestellt worden sind und die zumindestens 30 Gew.-% verzweigte Polymerketten enthalten, in der Schmelze mit einem Silan der Formel I

$$Y\text{-}\underset{\textstyle\setminus (Z)_n}{Si}\text{-}A_{(3-n)} \qquad (I)$$

worin n 0, 1 oder 2 ist,
Z einen inerten organischen Rest bedeutet,
Y einen zweiwertigen organischen, mit dem Siliziumatom verbundenen Rest, welcher eine funktionielle Gruppe enthält, die mit Aminogruppen (—NHR oder —$NH_2$, wobei R eine Alkyl-, Aryl-, Cyclohexyl- oder Aralkyl- gruppe mit maximal 12 Kohlenstoffatomen ist), Carboxylgruppen oder Amidgruppen der Polyamide in der Schmelze unter Ausbildung einer chemischen Bindung reagiert und
A einen bei Feuchtigkeitszutritt hydrolisierbaren Rest bedeutet,

vermischt und umgesetzt werden, die erhaltenen Umsetzungsprodukte einem Formgebungsprozeß unterworfen werden und anschließend die erhaltenen Formkörper mit Wasser oder Feuchtigkeit in Berührung gebracht werden, weiter verbesserte mechanische Eigenschaften besitzen.

So ist beispielsweise ihre Fließfestigkeit deutlich erhöht, das Kriechen unter Last, insbesondere auch bei erhöhter Temperatur stark erniedrigt, das Abtropfen bei starker Hitzeeinwirkung oder bei einem Kontakt zur offenen Flamme stark verzögert und die Hitze- und Hydrolysestabilität deutlich verbessert. Zudem sind nur noch ihre unvernetzten Anteile löslich ; Steigt die Temperatur über den üblichen Polyamidschmelzpunkt so behalten sie ihre Form bei.

Ein weiterer Vorteil des erfindungsgemäßen Verfahrens besteht darin, daß die Polyamide, aus denen unter Formgebung Formkörper hergestellt werden, durch thermoplastisch formgebende Verfahren in einfacher Weise verformt werden können, da die vernetzte Struktur, die einen Verlust der Schmelz- beziehungsweise Lösbarkeit bedingt, erst nach der Verformung durch intermolekulare Bildung von —Si-O-Si-Brücken aus hydrolysierbaren —Si-O-R-Gruppen der Polyamidmoleküle unter der Einwirkung von Wasser oder Feuchtigkeit entsteht.

Durch die Konzentration (Anzahl) vorgebildeter Verzweigungsstellen, die Art der funktionellen Gruppen des Silans und Art und Konzentration der für die Reaktion mit dem Silan maßgebenden funktionellen Gruppen der Polyamide lassen sich nach dem erfindungsgemäßen Verfahren die Eigenschaften der aus den erhaltenen Polyamidformmassen hergestellten Formkörper vorausbestimmen.

Als zur Durchführung des erfindungsgemäßen Verfahrens besonders geeignete Polyamide kommen einfach verzweigte Polyamide sowie Polyamide in Frage, wie sie in der EP-A-0345648 (Patentanmeldung, die am gleichen Tag wie die vorliegende Anmeldung unter dem internen Bearbeitungszeichen I 2407 EU beim EPA eingereicht worden ist) beschrieben werden.

Demgemäß werden erfindungsgemäß Caprolactam, Önantholactam, Laurinlactam, 12-Aminolaurinsäure sowie p-Aminomethylbenzoesäure oder ein Gemisch aus deisen Monomeren zur Herstellung der Polyamide bevorzugt.

Folgende erfindungsgemäß bevorzugte Ausführungsformen sind vorgesehen :

a) Es werden Polyamide verwendet, die einfach verzweigte Polymerketten enthalten.

b) Es werden Polyamide eingesetzt, die mehrfach verzweigte Polymerketten enthalten.

c) Es werden Polyamide eingesetzt, die zumindestens 40 Gew.-%, insbesondere 50 bis 95 Gew.-%, Polymerketten mit mindestens einer Kettenverzweigung besitzen.

d) Es werden Polyamide verwendet, die zumindestens 50 Gew.-% mehrfach verzweigte Polymerketten besitzen.

e) Es werden Polyamide eingesetzt, die neben mehrfach verzweigten Ketten auch lineare Ketten in einem Gewichtsanteil von 5 bis 70%, insbesondere 5 bis 50%, enthalten.

f) Es werden Polyamide mit Kettenenden der Art —$NH_2$, —NHR beziehungsweise —COOH verwendet, wobei —NHR bevorzugt ist (R steht für einen Alkyl-, Aryl-, Cyclohexyl- oder Aralkylrest mit maximal 12 Kohlenstoffatomen).

g) Es werden Polyamide eingesetzt, bei denen die Konzentration der Aminogruppen zwischen 30 und 450 µÄq/g liegt.

h) Es werden Polyamide eingesetzt, deren zahlenmäßiger Anteil der —NHR-Endgruppen mindestens 60% und insbesondere 70 bis 95% der gesamten Endgruppen beträgt.

i) Das Verfahren wird in der Weise durchgeführt, daß ein trockenes Polyamidgranulat mit einem das Silan enthaltenenen Masterbatch unter Ausschluß von Feuchtigkeit vorvermischt wird, die Mischung aufgeschmolzen wird, in der Schmelze unter intensivem Mischen die Reaktion des Silans mit dem Polyamid durchgeführt wird, das Reaktionsprodukt einem Formgebungsprozeß unterworfen und anschließend der Formkörper der Einwirkung von Wasser oder Feuchtigkeit ausgesetzt wird.

j) Das Verfahren wird in der Weise durchgeführt, daß das Silan in flüssiger Form kontinuierlich der Polyamidschmelze unter intensivem Mischen zugeführt wird, in der Schmelze die Reaktion des Silans mit dem Polyamid durchgeführt wird, das Reaktionsprodukt einem Formgebungsprozeß unterzogen wird und anschließend die erhaltenen Formkörper der Einwirkung von Wasser oder Feuchtigkeit ausgesetzt werden.

k) Es werden Silane verwendet, in denen die zweiwertigen organischen Reste Y als funktionelle Gruppen Epoxy-, Isocyanat-, Säureanhydrid-, Aminogruppen oder Carbonsäureester mit aromatischen Alkoholen mit 6 bis 14 Kohlenstoffatomen aufweisen.

l) Es werden Silane verwendet, bei denen der hydrolysierbare Rest A aus der Gruppe —OR besteht, worin R einen (cyclo) (ar)aliphatischen Rest oder einen Ethersauerstoffatome enthaltenden aliphatischen Rest, insbesondere mit 1 bis 12 Kohlenstoffatomen, bedeutet.

m) Der Rest R ist Methyl oder Ethyl.

n) Es werden Spritzgußteile, Rohre, Profile oder Kabel- oder Lichtleiterumhüllungen hergestellt.

Zur Durchführung des Verfahrens werden Polyamide mit mindestens 30 Gew.-% verzweigten Ketten verwendet. Um einfach verzweigte Polymerketten herzustellen, kann entsprechend dem Stand der Technik dem Grundmonomeren (Aminosäure und/oder Lactam beziehungsweise Gemische davon) eine verzweigend wirkende Komponente in vorausbestimmtem Molanteil zugesetzt werden. Solche Komponenten sind beispielsweise Trimesinsäure oder Nitrilotriethanamin.

Werden mehrach verzweigte Polymerketten benötigt, so werden Komponenten mit mehreren Carboxylgruppen und Komponenten mit mehreren, primären Aminogruppen so kombiniert, wie in der genannten EP-A-0345648 beschrieben.

Dort ist auch gezeigt wie Polyamide mit einem vorausbestimmten einfach- oder auch mehrfachverzweigten sowie einem linearkettigen Gewichtsanteil gezielt hergestellt werden können.

Die EP-A-0345648 lehrt auch, wie das gewünschte Molekulargewicht eingestellt werden kann. Sie zeigt wie man zu den gewünschten Undgruppen, beispielsweise —NHR, in der gewünschten Konzentration gelangt.

Im wesentlichen werden dabei zum Grundmonomeren verzweigend wirkende Komponenten in folgender Zusammensetzung zugefügt :

A 5 bis 150 µMol/g Polymer eines mindestens trifunktionellen Monomeren (Amin oder Carbonsäure) sowie

B 2 bis 100 µMol/g Polymer eines mindestens bifunktionellen Monomeren (Carbonsäure oder Amin) mit der Maßgabe, daß, wenn A Amin ist, B Carbonsäure sein muß, sowie, wenn A Carbonsäure ist, B Amin sein

muß sowie gegebenenfalls

C 5 bis 450 µMol/g Polymer eines bei der üblichen Polykondensation monofunktioinell wirkenden Monomeren. wobei A einen bifunktionellen Anteil mitenthalten kann.

Mit der Komponente C kann, wenn sie bezüglich ihrer kondensationsaktiven Gruppe mit A übereinstimmt, insbesondere ein schwächer verzweigter beziehungsweise ein linearer Kettenanteil erzeugt werden.

Stimmt C in der Funktionalität mit B überein und trägt C neben der kondensationsaktiven eine sterisch abgeschirmte —NHR-Gruppe, so dient diese Komponente der Ausbildung von Kettenenden mit —NHR-Gruppen. Aus dem Molverhältnis von A zu B und der Funktionalität von A und B kann direkt abgeleitet werden, in welcher Konzentration diese Art C eingesetzt werden muß, um möglichst viele —NHR-Kettenenden zu erhalten.

Bei der Vernetzung über Epoxidsilane werden insbesondere dann günstige Eigenschaften erzielt, wenn ein Polyamid eingesetzt wird, dessen (Zahlen-)anteil der —NHR-Gruppen mindestens 60%, vorzugsweise 70 bis 95%, der gesamten Aminoendgrupen beträgt.

Bei der Durchführung des erfindungsgemäßen Verfahrens werden die Silane der Formel I mit den Polyamiden vorzugsweise in einem Äquivalentverhältnis zur Summe der monofunktionellen —NHR— und bifunktionellen —$NH_2$-Endgruppen von 0,3 bis 1,2 eingesetzt.

Unter dem inerten organischen Rest Z gemäß Formel I ist ein unter den Reaktionsbedingungen inerter Rest zu verstehen, der insbesondere 1 bis 12 Kohlenstoffatome aufweist.

Als derartige organische Reste kommen Alkylreste mit 1 bis 12 Kohlenstoffatomen, Arylreste mit 6 bis 10 Kohlenstoffatomen sowie Cycloalkylreste in Frage.

Vorzugsweise werden zur Durchführung des erfindungsgemäßen Verfahrens Silane eingesetzt, bei denen der zweiwertige organische, mit dem Silizium verbundene Rest Y als funktionelle Gruppe Epoxy-, Isocyanat-, Säureanhydrid-, Aminogruppen oder Carbonsäureester aromatischer Alkohole mit 6 bis 14 Kohlenstoffatomen enthält. Der zweiwertige organische Rest als solcher besteht vorzugsweise aus geraden oder verzweigten Ketten mit 1 bis 6 Kohlenstoffatomen, die auch Ethersauerstoff enthalten können.

Der hydrolisierbare Rest A der Silanverbindungen der Formel I besteht vorzugsweise aus der Gruppe —OR, worin R einen (cyclo)(ar)aliphatischen Rest oder einen Ethersauerstoffatome enthaltenden aliphatischen Rest mit insbesondere 1 bis 4 Kohlenstoffatomen im aliphatischen Teil, in besonders bevorzugter Weise eine Methyl-, Ethyl- und/oder 2-Methoxyethylgruppe bedeutet.

Zur Durchführung des erfindungsgemäßen Verfahrens werden wegen der vielfältigen Reaktionsmöglichkeiten beispielsweise mit Epoxid, Isocyanat, Säureanhydrid und Carbonsäureester mit Phenolen die Aminoendgruppen besonders bevorzugt. Wird für die Silanaddition die rasch ablaufende Anlagerungreaktion von Epoxid bevorzugt, so eignet sich besonders ein durch —NHR gebildetes Kettenende im Polyamid.

Eine möglichst gute Verteilung des Silans in der Polyamidschmelze ist unerläßlich, damit die Ankopplungsreaktion an das Polyamid, beispielsweise an die NHR-Gruppe, möglichst vollständig ablaufen kann. Die Einmischung des Silans und die Reaktion mit dem Polyamid müssen unter Feuchtigkeitsauschluß ablaufen, damit die Vernetzungsreatkion zu —Si-O-Si— infolge Hydrolyse der Si-OR-Gruppen nicht bereits vor der Verformung erfolgt.

Zur Durchführung des erfindungsgemäßen Verfahrens haben sich zwei Methoden der Silanzugabe besonders bewährt.

Bei einem kontinuierlichen Extrusionsprozeß, bei dem das Endprodukt ein Rohr, ein Profil, eine Kabel- oder eine Lichtwellenleiterummantelung sein kann, ist das Verfahren der kontinuierlichen Einspritzung eines vorgegebenen Gewichtsanteils des Silans direkt in die Polymerschmelze geeignet. Für eine besonders erfolgreiche Durchführung des Verfahrens muß dabei der Extruder so konstruiert sein, daß eine gute Verteilung des Silans in der Schmelze und ein möglichst gleichmäßiges Fließen der Polymerschmelze gewährleistet ist. Totstellen mit fehlendem oder nur geringem Schmelzefluß führen im Dauerbetrieb zu Störungen durch vernetztes Material.

Für die Durchführung des Verfahrens beim Spritzgießen hat sich das Masterbatch-Verfahren besonders bewährt, das in der DE-PS 3545032 beschrieben wird. Dieses neue Verfahren beruht auf dem Einsatz von polyamidverträglichen Polymerkomponenten, die bei Raumtemperatur oder einer Temperatur, bei der keine Nebenraktionen ablaufen, so große Mengen an Silan aufnehmen, daß daraus für das Verfahren. geeignete Masterbatches hergestellt werden können. Geeignete Masterbatch-Träger sind also mikroporöse Polyamide, zum Beispiel Polyamid-12 oder Polymere, die Sequenzen mit Doppelbindungen besitzen, zum Beispiel aus Polybutadien, wie die als SB oder als SBS bezeichneten Di- oder Triblockpolymeren, oder vernetzte butadienhaltige Polymere, beispielsweise des Kern-Mantel-Typs. Diese Produkte können zur Erzielung einer besseren Verträglichkeit zum Polyamid auch funktionalisiert sein, beispielsweise die Gruppe —COOH oder eine Säureanhydridgruppe besitzen.

Geeignet sind ferner Copolyolefine, insbesondere Copolyolefine mit niederem Kristallinitätsgrad, wie beispielsweise Ethylen/Propylen oder Ethylen/ α-Olefin-Copolyolefine, wobei als α-Olefine beispielsweise Buten, Hexen oder Okten in Frage kommen, ferner kommen Ethylen/Acrylsäureester-Copolymere, oder auch Copolyolefine aus mehr als zwei Cokomponenten in Frage, wie Ethylen/α-Olefin/Acrylsäureester-Copolymere, wobei als Ester Ethyl- beziehungsweise Butylester verwendet werden. Derartige Copolyolefine können auch zusätzlich gepfropft sein, beispielsweise mit Maleinsäureanhydrid.

Das erfindungsgemäße Verfahren zur Herstellung von Gebrauchsgegenständen aus Lactam/Aminsäure-Polyamid unterscheidet sich insbesondere dadurch vom Stand der Technik, daß über die Silanvernetzung ein Netzwerk mit zwei Arten von Netzwerkpunkten entsteht. Zum einen sind es die ursprünglichen Verzweigungsstellen, die bedingt durch die verzweigend wirkenden polyfunktionellen Komponenten bereits im Polyamidausgangsmaterial vorhanden sind, zum anderen die Netzwerkstellen, die das Verfahren der Silanvernetzung über die Kettenenden bringt. Die Zahl der Kettenenden, die dabei neu verknüpft werden, ist natürlich abhängig vom Äquivalentanteil an Silan, bezogen auf die Konzentration der verknüpfungsaktiven Stellen im Polyamid. Diese hängt wieder ab vom Verzweigungsgrad, dem Molekulargewicht und dem Anteil der Kettenenden, die ein vernetzungsaktives Zentrum tragen, beispielsweise im Falle der Vernetzung mit Epoxidsilan von der Konzentration an —NHR— beziehungsweise —$NH_2$-Gruppen.

Ein weiterer Vorteil des erfindunsgemäßen Verfahrens besteht darin, daß eine große Anzahl von thermisch stabilen Vernetzungspunkten gezielt erzeugt werden kann. Dadurch können auch die wesentlichen Eigenschaften, wie die Fließfestigkeit, das Kriechen unter Last und Temperatureinwirkung, die Lösungsmittelquellung und das Wegtropfen bei Hitze- und Flammeneinwirkung gezielt, verbessert werden.

Die nach dem erfindungsgemäßen Verfahren hergestellten Polyamidformkörper können außerdem auf vielfältige Art und Weise modifiziert werden, beispielsweise durch Zusatz von Stabilisatoren gegenüber nachteiligen Einwirkungen von Hitze, Licht oder Oxidation und Verfärbung, Pigmenten, Ruß, Verstärkungsmaterialien, wie Glasfasern oder mineralischen Füllstoffen, Farbstoffen, Weichmachern sowie Polymerkomponenten, wobei diese Additive keine unerwünschten Nebenraktionen eingehen beziehungsweise die Vernetzungsreaktion nicht wesentlich beeinträchtigen dürfen. Besonders bevorzugt sind dabei mit Aminosilanen beschichtete mineralische Füllstoffe und/oder Glasfasern.

Die Erfindung soll nun anhand von Beispielen näher erläutert werden.

## Beispiele

Als Polyamidausgangsstoffe werden verwendet:

| | |
|---|---|
| Laurinlactam | LL |
| Amiolaurinsäure | ALS |
| Caprolactam | CL |

Weitere Komponenten der Polymerisationsrezepturen sind:

| | |
|---|---|
| Trimesinsäure | TMS |
| Nitrilotriethanamin | N-TEA |
| Azelinsäure | AZ |
| Adipinsäure | ADIP |
| Diaminohexan | HMD |
| 3-Amino-1-cyclohexylaminopropan | ACAP |

(Beispiel für ein Amin mit einer kondensationsaktiven und einer sterisch gehinderten Aminogruppe.)

## Herstellung der Polyamide

Die in den folgenden Versuchen verwendeten Polyamide A bis K wurden im technischen Maßstab im Batch-Prozeß hergestellt. Dazu wurden mit Wärmeträgeöl beheizte, auf Überdruck ausgelegte Stahlautokalaven verwendet und die Polykondensation in bekannter Weise unter einer Stickstoff/Wasserdampf-Atomosphäre durchgeführt. Die Herstellung von Polyamid aus Aminosäuren und Lactamen ist ein bekannter Prozeß. Die Polymerisationsrezepturen (Grundmonomere und verzweigend wirkende Komponenten) sind in Tabelle 1a zusammengefaßt. Tabelle 1b enthält die Polymerisationsbedingungen und insbesondere die analytisch bestimmte Konzentration an Aminfunktionen, deren Hauptanteil die Funktionalität —NHR besitzt.

Die Polyamide entsprechend Tabelle 1 wurden anschließend im Spritzgußverfahren zu Prüfkörpern gemäß DIN 53453 sowie DIN 53455 verarbeitet. Dabei wurde das in der DE-PS 3545032 beschriebene Masterbatchverfahren angewendet. Es wurde eine speziell bevorzugte Ausführungsoform dieses Verfahrens ausgewählt, nämlich mikroporöses Polyamid als Masterbatchträger für das Silan verwendet und jeweils 30 Gew.-% dieses Trägers mit 70 Gew.-% Silan beladen.

Da es in der vorliegenden Patentanmeldung um einen Vergleich linearer Polyamidkettenmoleküle mit unterschiedlich verzweigten Polyamidkettenmolekülen geht und insbesondere der Einfluß der Kettenstruktur auf das Verhalten der Polyamide verglichen werden soll, wird in allen Beispielen dieselbe Art von reaktiven Zentren, nämlich —NHR, dasselbe Silan mit einer reaktiven Epoxidgruppe, derselbe Masterbatchträger nämlich mikroporöses PA-12 sowie als Verarbeitungsverfahren jeweils die Spritzgußverarbeitung angewendet.

Für die Beispiele 1 bis 28 werden die in Tabelle 1 beschriebenen Polymerisate A bis K eingesetzt. Die Versuche sind numeriert mit 1 bis 28, wobei die Vergleichsversuche jeweils mit V gekennzeichnet sind. Die Versuche sind zudem ergänzt durch identisch numerierte Kraft-Dehnungs-Diagramme. (Figuren 3 bis 5, wobei die Diagramme bei Raumtemperatur und einer Dehnungsgeschwindigkeit von 50 mm pro Minute aufgenommen wurden).

Diese zeigen die Änderungen im mechanischen Verhalten viel deutlicher auf als die Zahlen in den Tabellen, welche jeweils nur einen Punkt im Kraft-Dehnungs-Diagramm beschreiben. Diese Diagramme zeigen insbesondere den aus folgender Überlegung abgeleiteten Zusammenhang sehr klar auf. Das verwendete Silan besitzt neben der zu Polyamid reaktiven Epoxidgruppe drei kondensationsfähige Methoxygruppen. Durch deren Kondensation entsteht bei Verwendung linearer Polyamide ein 3-dimensionales Netzwerks nach folgendem bekannten Schema :

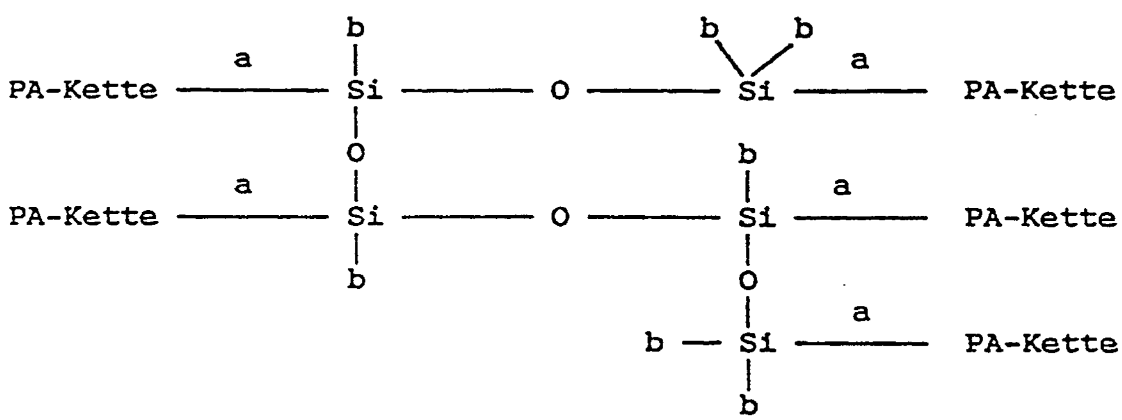

Dabei bedeuten a den am Polyamid addierten, die Epoxidgruppe tragenden Rest des Silans und b die Methoxy- sowie die zu OH hydrolysierte Methoxygruppe. Es ist zu beachten, daß diese Gruppen weiter mit sich selbst kondensieren können, wodurch das Netzwerk nur noch dichter wird, als gezeigt.

Würden die mechanischen Werte, insbesondere das KD-Verhalten, direkt mit der Dichte dieses Netzwerkes zusammenhängen und mit dessen Zunahme ansteigen, so müßten kurze, —NHR-terminierte PA-Ketten bei stöchiometrischer 1 : 1-Silanvernetzung das beste mechanische Verhalten zeigen, insbesondere die höchsten Verformungskräfte ergeben. In V3 und V4 sind nun lineare PA-Kettenmolküle silanvernetzt. Obwohl das Polyamid zu V4 kürzere Polyamid—moleküle und mehr reaktive Zentren enthält als V3, liefert es schlechtere Zugwerte.

Erstaunlicherweise hat sich nun gezeigt, daß es bei Verwendung von verzweigtkettigem, thermoplastisch vearbeitbarem Polyamid mit zu Silan reaktiven Zentren möglich ist, stark verbesserte mechanische Werte zu erhalten. Dabei werden sowohl die Zähigkeit als auch die Festigkeit deutlich angehoben. Dies ist insofern erstaunlich und unerwartet, als die üblichen Methoden zur Erhöhung der Zähigkeit die Festigkeit und Steifigkeit von Polyamid negativ beeinflussen. Wie der Verlauf der in den beigefügten Figuren 3 bis 5 beschriebenen Kraft-Dehnungskurven zeigt, wird jedoch durch die Silanvernetzung von verzweigtkettigem Polyamid dessen Festigkeit erhöht, ohne daß die Zähigkeit reduziert wird.

Dabei ist die Erhöhung der Festigkeit bei jeweils derselben Dehnung bei vergleichbarem Molekulargewicht um so deutlicher, je mehr Verzweigungsstellen das verwendete Polyamid besitzt. In den Fig. 3 bis 5 sind dazu die Kraft-Dehnungskurven von verzweigten mit verzweigt/vernetzten Polyamiden gemäß Tabelle 2 zum Vergleich aufgeführt. V1 bzw. V25 zeigen den Kurvenverlauf der unveränderten Polyamide vom Typ PA-12 bzw. PA-6.

Neben den in den Tabellen aufgeführten Eigenschaften ist natürlich auch die in der DE-OS 333981 beschriebene Formbeständigkeit oberhalb des üblichen Polyamidschmelzpunktes gegeben, wenn so viel Silan mitverwendet wird, daß sich ein durchgehendes 3-dimensionales Netzwerk aufbaut. Beim in Spalte 8 aufgelisteten Antiflamm-(AF)-Test werden 3,2 mm dicke Stäbe so beflammt wie es im UL94-Test der Underwriters Laboratories, Melvill, USA, beschrieben ist. Aufgeführt ist die mittelere Beflammungszeit (2 Messungen) bis Tropfenbildung erfolgt. Die Ergebnisse zeigen, daß es bei Verwendung von Formteilen aus erfindungsgemäßem Polyamid bei Flammeneinwirkung wesentlich länger dauert, bis Polyamidmasse frei wegfließt und diese Zeit mit ansteigender Verzweigungsdichte zunimmt.

Es ist davon auszugehen, daß allgemein bei der üblichen Silanvernetzung ein dichtes Netzwerke entsteht. Geht man von der Silanvernetzung über die Kettenenden aus, was im allgemeinen für Polyamid der Fall ist, so wird das Netzwerk umso dichter, je kürzer die mit einem reaktiven Zentrum versehenen Polyamidketten sind. Verwendet man die in der Technik üblichen Silane mit einer zu PA reaktiven Gruppe und verwendete Polyamidausgangsmaterial und damit umso dichter das Netzwerk ist. Erst durch die Verwendung von verzweigtem Polyamid, das Strukturen mit zwei Arten von Netzwerkpunkten ergibt, ist es überraschenderweise gelungen, Formgegenstände mit sehr stark verbesserten Eigenschaften, wie beispielsweise Festigkeit, Zähigkeit, Formbeständigkeit bei Hitzeeinwirkung, reduziertem Abtropfen bei Beflammung und reduziertem Kriechen unter Last gezielt herzustellen.

Tabelle 1

A:-Polymerisationsrezepte

| Versuch N° | Polyamid-ausgangsmat | Ansatz Kg | Strukturregler, [mMol/kg Polymer] TMS | N-TEA | AZ | ADIP | HMD | ACAP | Bemerkungen |
|---|---|---|---|---|---|---|---|---|---|
| A | LL | 400.0 | – | – | 28.0 | | – | 58.0 | lineare Polymerkette |
| B | LL | 45.0 | – | – | 28.5 | | | 60.0 | lineare Polymerkette |
| C | LL | 42.0 | 25.0 | | | | | 80.0 | 1 Verzweigung |
| D | ALS | 8.0 | 30.0 | | | | | 92.0 | 1 " |
| E | " | 8.0 | 60.0 | | | | 30.0 | 120.0 | 2 Verzweigungen |
| F | " | 8.0 | 90.0 | 30.0 | | | | 180.0 | 4 " |
| G | " | 8.0 | 60.0 | 30.0 | | 60.0 | | 170.0 | 3 Verzweigungen+linearer Anteil |
| H | " | 8.0 | 60.0 | 30.0 | | 60.0 | | 170.0 | 3 Verzweigungen+linearer Anteil |
| J | CL | 40.0 | 100.0 | 30.0 | | | | 210.0 | Bevorzugt 4 Verzweigungen |
| K | CL | 42.0 | 56.0 | 28.0 | | 46.0 | | 176.0 | 3 Verzweigungen+linear Anteil |

B:-Polymerisationsbedingungen / C:-Polymeranalytik

| Versuch N° | Druckphase Temp [°C] | Druckphase Zeit [h] | Druckphase Druck [atü] | Entgasung Temp. [°C] | Entgasung Zeit [h] | Viskosität rel 0.5% Metakresol | Schmelzviskosität Temper. [°C] | Schmelzviskosität Belastung [N] | Schmelzviskosität Pa.s | Endruppen (µÄ/g) -NHR | Endruppen (µÄ/g) -COOH |
|---|---|---|---|---|---|---|---|---|---|---|---|
| A | 290.0 | 6.0 | 20.0 | 280 | * 3 | 2.02 | 270.0 | 122.6 | 320.0 | 40 | 6 |
| B | 290.0 | 6.0 | 20.0 | 280 | 4 | 1.81 | | | – | 65 | 19 |
| C | 295.0 | 7.0 | 20.0 | 280 | 6 | 1.78 | | | | 83 | 24 |
| D | 220.0 | 1.0 | 5.0 | 220 – 240 | 6 | 1.70 | 220.0 | " | 265.0 | 122 | 22 |
| E | 220.0 | 1.0 | 5.0 | " | 8 | 1.72 | " | " | 390.0 | 135 | 22 |
| F | 220.0 | 1.0 | 5.0 | " | 8 | 1.92 | " | | 380.0 | 190 | 14 |
| G | 220.0 | 1.0 | 5.0 | 220 – 250 | 6 | 1.76 | 260.0 | " | 33.0 | 170 | 22 |
| H | 220.0 | 1.0 | 5.0 | " | 6 | 1.89 | " | " | 390.0 | 160 | 27 |
| J | 265.0 | 2.0 | 10.0 | 265 | 7 | 1.88 | | | | 180 | 26 |
| K | 240.0 | 3.0 | 10.0 | 240 – 260 | 8 | 1.51 | | | | 200 | 30 |

* davon 1 Stunde bei 100 Torr (13,3 KPa)

Tabelle 2

| Versuch Nº | Polyamid Typ | Produkt | Struktur | Reaktive Zentren µÄ/g | Silan ① µMol/g | Silan ② % | K S Z ③ tro | K S Z ③ kon | SISP ④ | SID ⑤ % | REF ⑥ | RED ⑦ % | AF-Test ⑧ Sek | |
|---|---|---|---|---|---|---|---|---|---|---|---|---|---|---|
| V1 | 12.0 | Stand. | —— | - | - | - | 6 | 10 | 33.0 | 20 | 50 | 300 | 4.0 | Standardspritzguss – material z. Vergleich. |
| V2 | " | A | —— | 40.0 | - | - | 9 | 16 | 39.0 | 28 | 44 | 150 | 4.0 | |
| V3 | " | A | —— | 40.0 | 32.0 | 80.0 | 10 | 36 | 43.0 | 34 | 46 | 130 | 6.0 | |
| V4 | " | B | —— | 65.0 | 60.0 | 92.0 | - | KB | 33.0 | 20 | 40 | 180 | -(?) | |
| V5 | " | C | 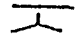 | 83.0 | - | - | 4 | 6 | 41.0 | 34 | 38 | 80 | 3.0 | |
| 6 | " | C | " | 83.0 | 66.0 | 80.0 | 10 | 37 | 47.0 | 33 | 48 | 100 | 10.0 | |
| V7 | " | D | " | 122.0 | - | - | 5 | 4 | 36.0 | 20 | 54 | 300 | 2.0 | |
| 8 | " | D | " | 122.0 | 98.0 | 80.0 | 10 | 19 | 42.0 | 30 | 50 | 150 | 7.0 | |
| V9 | " | E | 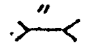 | 135.0 | - | - | 4 | 4 | 38.0 | 20 | 41 | 230 | 2.0 | |
| 10 | " | E | " | 135.0 | 108.0 | 80.0 | 11 | 46 | 49.0 | 30 | 50 | 80 | 13.0 | |
| V11 | " | F | 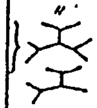 | 190.0 | - | - | 4 | 5 | 49.0 | 30 | 48 | 50 | 6.0 | |
| 12 | " | F | | 190.0 | 175.0 | 92.0 | 21 | 40 | - | - | 60 | 50 | 20.0 | |
| V13 | " | G | | 170.0 | - | - | 4 | 4 | 44.0 | 30 | 37 | 50 | | |
| 14 | " | G | " | 170.0 | 140.0 | 84.0 | 20 | 55 | - | - | 61 | 70 | | |
| 15 | " | G | " | 17.0 | 200.0 | 118.0 | 44 | KB | - | - | 64 | 60 | | |
| V16 | " | H | " | 160.0 | - | - | | | | | | 30 | | |
| 17 | " | H | " | 160.0 | 40.0 | 25.0 | | | | | | 30 | | |
| 18 | " | H | " | 160.0 | 80.0 | 50.0 | | | | | | 30 | | |
| 19 | " | H | " | 160.0 | 120.0 | 75.0 | | | | | | 30 | | |
| 20 | " | H | " | 160.0 | 160.0 | 100.0 | | | | | | 30 | | |
| V21 | 6 | J | 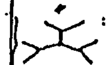 | 180.0 | - | - | | | | | 37 | | | |
| 22 | " | J | | 180.0 | 54.0 | 30.0 | | | | | 41 | | | |
| 23 | " | J | " | 180.0 | 90.0 | 50.0 | | | | | 45 | | | |
| 24 | " | J | " | 180.0 | 144.0 | 80.0 | | | | | 46 | | | |
| V25 | " | Stand. | | 180.0 | - | - | | | 30.0 | 20 | 57 | | | Standardspritzguss – material |
| V26 | " | K | 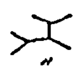 | 200.0 | - | - | 1.4 | KB | 31.0 | 30 | 29 | 100 | | |
| 27 | " | K | " | 200.0 | 100.0 | 50.0 | 1.4 | KB | 37.0 | 35 | 37 | 65 | | |
| 28 | " | K | " | 200.0 | 180.0 | 90.0 | 1.5 | KB | - | - | 43 | 65 | | |

Es bedeuten : (——) linear , ( 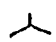 ) 1-fachverzweigte , ( 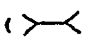 ) 2-fachverzweigte, etc... Kettenstruktur . .

In Tabelle 2 bedeuten :

V = Vergleichsversuche
1 = γ -Gycidoxypropyltrimethoxysilan
2 = Äquiv-% Silan bezogen auf die reaktiven Zentren
3 = die Kerbschlagzähigkeit nach DIN 53453 mit tro = trocken, kon = konditioniert, KB = kein Bruch

4, 5, 6 und 7 = die Zugwerte nach DIN 53 455 wobei

4 = Streckspannung
5 = Dehnung bei Streckspannung
6 = Reißfestigkeit
7 = Reißdehnung
8 = Beflammungstest nach UL 94 : Zeit bis Abtropfen einsetzt ; in Sekunden (Zugstab nach DIN 53455)

In den Figuren 1 und 2 ist noch das Kriechverhalten unter Last und Temperatureinwirkung (80°C) anhand von Zeitdehnlinien dargestellt. Pro Variante wurden jeweils zwei Kurven gemessen. Es gelten folgende Zuordnungen :

Die Zeitdehnlinien (ZDL) a) und b) entsprechen dem unvernetzten Polymerisat A sowie die ZDL c und d) dem zu 100% vernetzten Polymerisat A, die ZDL e) und f) einem unvernetzten, einfachverzweigten Polyamid-12 mit 85 µÄ/g Aminfunktionen (Polymerisat L), und die ZDL g) und h) dem zu 100% vernetzten Polymerisat L.

In Figur 2 sind die Zeitdehnlinien eines Polyamid-12 Typs M mit drei Kettenverzweigungen und 170 µÄ/g Aminfunktionen dargestellt. Die ZDL i) und k) entsprechend dabei dem unvernetzten Ausgangspolyamid, die Linien l) und m) dem zu 100% vernetzten Polyamid M. Dabei sind das Polyamid L ähnlich dem Polyamid C sowie das Polyamid M ähnlich dem Polyamid G hergestellt und besitzen je dieselbe Grundstruktur.

In Figur 2 ist zudem die Zeitdehnlinie entsprechend dem Vergleichsmaterial V1, aber gemessen bei 20°C, eingetragen. Bei den Kriechkurven wurde die Abszisse jeweils der gemessenen Dehnung angepaßt.

Die Kurven zeigen, daß die Dehnung durch die Ausbildung der vernetzten Struktur sehr deutlich reduziert wird und umso geringer ist, je stärker vorverzweigt das verwendete Polyamid ist. Die sehr große Verbesserung zeigt der Vergleich mit V1. Nach nur ca. 10 Stunden Belastungszeit kriecht das vernetzte Polymerisat M bei 80°C lediglich gleich viel wie das unvernetzte Standardspritzgußmaterial bei 20°C. Bei längeren Belastungszeiten ist die Dehnung von Polymerisat M, vernetzt bei 80°C sogar zunehmend geringer als die Dehnung von Standardspritzgußmaterial bei Raumtemperatur. Dies zeigt eindrücklich die ausgezeichnete Eignung des erfindungsgemäßen Verfahrens zur Herstellung hochwertiger Konstruktionsteile.

## Patentansprüche

1. Verfahren zur Herstellung von vernetzten Polyamidformkörpern, dadurch gekennzeichnet, daß Polyamide, die durch hydrolytische Polymerisation aus Lactamen und/oder ω-Aminocarbonsäuren mit 6 bis 12 Kohlenstoffatomen oderGemischen davon hergestellt worden sind und die mindestens 30 Gew.-% verzweigte Polymerketten enthalten, in der Schmelze mit einem Silan der Formel I

```
Y-Si-A (3-n)
   \              (I)
   (Z) n
```

worin n 0,1 oder 2 ist,
Z einen inerten organischen Rest bedeutet,
Y einen zweiwertigen organischen, mit dem Siliziumatom verbundenen Rest, welcher eine funktionelle Gruppe enthält, die mit Aminogruppen (—NHR oder —$NH_2$, wobei R eine Alkyl-, Aryl-, Cyclohexyl- oder Aralkylgruppe mit maximal 12 Kohlenstoffatomen ist), Carboxylgruppen oder Amidgruppen der Polyamide in der Schmelze unter Ausbildung einer chemischen Bindung reagiert und
A einen bei Feuchtigkeitszutritt hydrolisierbaren Rest bedeutet,

vermischt und umgesetzt werden, die erhaltenen Umsetzungsprodukte einem Formgebungsprozeß unterworfen werden und anschließend die erhaltenen Formkörper mit Wasser oder Feuchtigkeit in Berührung gebracht werden.

2. Verfahren nach Anspruch 1, dadurch gekennzeichnet, daß Polyamide, die einfach verzweigte Polymerketten enthalten, verwendet werden.

3. Verfahren nach den Ansprüchen 1 bis 2, dadurch gekennzeichnet, daß Polyamide, die mehrfach verzweigte Polymerketten enthalten, eingesetzt werden.

4. Verfahren nach den Ansprüchen 1 bis 3, dadurch gekennzeichnet, daß Polyamide, die zumindestens 40 Gew.-%, insbesondere 50 bis 95 Gew.-%, Polymerketten mit mindestens einer Kettenverzweigung besitzen, eingesetzt werden.

5. Verfahren.nach den Ansprüchen 1 bis 4, dadurch gekennzeichnet, daß Polyamide, enthaltend Polymerketten mit mehreren Verzweigungen, verwendet werden.

6. Verfahren nach Anspruch 5, dadurch gekennzeichnet, daß Polyamide verwendet werden, die zumindestens 50 Gew.-% mehrfach verzweigte Polymerketten besitzen.

7. Verfahren nach den Ansprüchen 1 bis 6, dadurch gekennzeichnet, daß Polyamide, die neben mehrfach verzweigten Ketten auch lineare Ketten in einem Gewichtsanteil von 5 bis 70%, insbesondere 5 bis 50%, enthalten, eingesetzt werden.

8. Verfahren nach einem der vorhergehenden Ansprüche, dadurch gekennzeichnet, daß Polyamide mit Kettenenden der Art $—NH_2$, —NHR beziehungsweise —COOH verwendet werden, wobei —NHR bevorzugt ist (R steht für einen Alkyl-, Aryl-, Cyclohexyl- oder Aralkylrest mit maximal 12 Kohlenstoffatomen).

9. Verfahren nach einem der vorhergehenden Ansprüche, dadurch gekennzeichnet, daß Polyamide eingesetzt werden, bei denen die Konzentration der Aminogruppen zwischen 30 und 450 µÄq/g liegt.

10. Verfahren nach einem der vorhergehenden Ansprüche, dadurch gekennzeichnet, daß Polyamide eingesetzt werden, deren zahlenmäßiger Anteil der —NHR-Endgruppen mindestens 60% und insbesondere 70 bis 95% der gesamten Endgruppen beträgt.

11. Verfahren nach einem der vorhergehenden Ansprüche, dadurch gekennzeichnet, daß ein trockenes Polyamidgranulat mit einem das Silan enthaltenenen Masterbatch unter Ausschluß von Feuchtigkeit vorvermischt wird, die Mischung aufgeschmolzen wird, in der Schmelze unter intensiven Mischen die Reaktion des Silans mit dem Polyamid durchgeführt wird, das Reaktionsprodukt einem Pormgebungsprozeß unterworfen und anschließend der Formkörper der Einwirkung von Wasser oder Feuchtigkeit ausgesetzt wird.

12. Verfahren nach einem der vorhergehenden Ansprüche, dadurch gekennzeichnet, daß das Silan in flüssiger Form kontinuierlich der Polyamidschmelze unter intensivem Mischen zugeführt wird, in der Schmelze die Reaktion des Silans mit dem Polyamid durchgeführt wird, das Reaktionsprodutk einem Formgebungsprozeß unterzogen wird und anschließend die erhaltenen Formkörper der Einwirkung von Wasser oder Feuchtigkeit ausgesetzt werden.

13. Verfahren nach einem der vorhergehenden Ansprüche, dadurch gekennzeichnet, daß Silane verwendet werden, in denen die zweiwertigen organischen Reste Y als funktionelle Gruppen Epoxy-, Isocyanat-, Säureanhydrid-, Amino- oder Carbonsäureester mit aromatischen Alkoholen mit 6 bis 14 Kohlenstoffatomen aufweisen.

14. Verfahren nach einem der vorhergehenden Ansprüche, dadurch gekennzeichnet, daß Silane verwendet werden, bei denen der hydrolysierbare Rest A aus der Gruppe —OR besteht, worin R einen (cyclo) (ar)aliphatischen Rest oder einen Ethersauerstoffatome enthaltenden aliphatischen Rest, insbesondere mit 1 bis 12 Kohlenstoffatomen, bedeutet.

15. Verfahren nach Anspruch 14, dadurch gekennzeichnet, daß der Rest R Methyl oder Ethyl ist.

16. Verfahren nach einem der vorhergehenden Ansprüchen, dadurch gekennzeichnet, daß Spritzgußteile, Rohre, Profile, Kabel- oder Lichtleiterumhüllungen hergestellt werden.

## Claims

1. A process for the preparation of cross-linked polyamide moulded bodies, characterised in that polyamide prepared by hydrolytic polymerisation of lactams and/or ω-aminocarboxylic acids with 6 to 12 carbon atoms or mixtures thereof and containing at least 30% by weight branched polymer chains, is mixed and reacted, in the melt, with a silane of formula I

$$Y\text{-}Si(Z_n)\text{-}A_{3-n} \quad (I)$$

wherein n is 0, 1 or 2 ;

Z is an inert organic group ;
Y is a divalent organic radical bonded to the silicon atom, carrying a functional group which reacts with the amino groups (—NHR or —$NH_2$, in which R is an alkyl, aryl, cyclohexyl or arylalkyl group having a maximum of 12 carbon atoms), carboxyl groups or amide groups of the polyamide in the melt, to form a chemical bond ; and
A is a radical which can be hydrolysed on the admission of moisture,

subjecting the resultant reaction product to a moulding process and contacting the resultant moulded product with water or moisture, with stirring.

2. A process according to claim 1, characterised in that the polyamide contains singly-branched polymer chains.

3. A process according to claims 1 to 2, characterised in that the polyamide contains multiply-branched polymer chains.

4. A process according to claims 1 to 3, characterised in that the polyamide comprises at least 40% by wt, in particular 50 to 95% by wt, polymer chains with at least one chain branching.

5. A process according to claims 1 to 4, characterised in that the polyamide contains polymer chains with multiple branching.

6. A process according to claim 5, characterised in that the polyamide comprises at least 50% by wt multiply-branched polymer chains.

7. A process according to claims 1 to 6, characterised in that the polyamide, in addition to multiply-branched chains, contains also linear chains in a weight proportion of 5 to 70%, in particular 5 to 50%.

8. A process according to one of the preceding claims, characterised in that the polyamide has chain ends of the type —$NH_2$, —NHR or, as the case may be, —COOH are used, wherein —NHR is preferred (R is an alkyl, aryl, cyclohexyl or aralkyl group having a maximum of 12 carbon atoms).

9. A process according to one of the preceding claims, characterised in that the polyamide has a concentration of amino groups between 30 and 450 µeq/g.

10. A process according to one of the preceding claims, characterised in that the polyamide has a numerical proportion of the —NHR terminal groups of at least 60% and in particular 70 to 95% of the total terminal groups.

11. A process according to one of the preceding claims, characterised in that a dry polyamide granulate is pre-mixed with a masterbatch containing the silane in the absence of moisture, the mixture is melted, the reaction of the silane with the polyamide is conducted in the melt with thorough mixing, the reaction product is subjected to a moulding process and the moulded body is then subjected to the action of water or moisture.

12. A process according to one of the preceding claims, characterised in that the silane is introduced continuously in liquid form into the polyamide melt with thorough mixing, the reaction of the silane with the polyamide is conducted in the melt, the reaction product is subjected to a moulding process and the resultant moulded body is subjected to the action of water or moisture.

13. A process according to one of the preceding claims, characterised in that the divalent organic radical Y of the silane has epoxy, isocyanate, acid anhydride, amino or carboxylic acid ester with aromatic alcohols of 6 to 14 carbon atoms as functional groups.

14. A process according to one of the preceding claims, characterised in that the hydrolysable radical A of the silane comprises the group —OR, wherein R is a (cyclo)(ar)aliphatic radical or an ether oxygen atom-containing aliphatic radical, in particular with 1 to 12 carbon atoms.

15. A process according to claim 14, characterised in that the group R is methyl or ethyl.

16. A process according to one of the preceding claims, characterised in that injection moulding parts, tubes, sections, cable- or optical waveguide claddings are prepared.

## Revendications

1. Procédé de préparation de corps moulés réticulés en polyamides, caractérisé en ce qu'on mélange des polyamides à l'état fondu, qui sont préparés par polymérisation hydrolytique à partir de lactames et/ou d'acides ω-aminocarboxyliques comportant 6 à 12 atomes de carbone ou à partir de mélanges de ces composés, lesdits polyamides contenant au moins 30% en poids de chaînes polymères ramifiées, avec un silane de formule I

$$\begin{array}{l} Y-Si-A\ (3-n) \\ \quad\ \ \diagdown \\ \quad\ (Z)\ n \end{array} \qquad (I)$$

dans laquelle n vaut 0, 1 ou 2,
Z représente un reste organique inerte,
Y représente un reste organique bivalent lié à l'atome de silicium et comportant un groupe fonctionnel qui réagit avec des groupes amino (—NHR ou —$NH_2$, R représentant un groupe alcoyle, aryle, cyclohexyle ou aralcoyle ayant au plus 12 atomes de carbone), des groupes carboxyle ou des groupes amide des polyamides à l'état fondu, en formant une liaison chimique, et
A représente un reste hydrolysable par apport d'humidité,

et on fait réagir ce mélange, on soumet les produits réactionnels obtenus à un procédé de façonnage et finalement, on met les corps moulés obtenus en contact avec de l'eau ou de l'humidité.

2. Procédé selon la revendication 1, caractérisé en ce qu'on utilise des polyamides qui contiennent des chaînes polymères à ramification simple.

3. Procédé selon les revendications 1 et 2, caractérisé en ce qu'on utilise des polyamides qui contiennent des chaînes polymères à ramifications multiples.

4. Procédé selon les revendications 1 à 3, caractérisé en ce qu'on utilise des polyamides qui contiennent au moins 40% en poids, en particulier 50 à 95% en poids, de chaînes polymères présentant au moins une ramification.

5. Procédé selon les revendications 1 à 4, caractérisé en ce qu'on utilise des polyamides contenant des chaînes polymères présentant plusieurs ramifications.

6. Procédé selon la revendication 5, caractérisé en ce qu'on utilise des polyamides qui contiennent au moins 50% en poids de chaînes polymères à ramifications multiples.

7. Procédé selon les revendications 1 à 6, caractérisé en ce qu'on utilise des polyamides qui, en plus des chaînes à ramifications multiples, contiennent aussi une fraction de 5 à 70% en poids, en particulier de 5 à 50% en poids, de chaînes linéaires.

8. Procédé selon l'une quelconque des revendications précédentes, caractérisé en ce qu'on utilise des polyamides à terminaisons de chaîne du type —$NH_2$, —NHR ou —COOH, la terminaison —NHR étant préférée (R représente un reste alcoyle, aryle, cyclohexyle ou aralcoyle ayant au plus 12 atomes de carbone).

9. Procédé selon l'une quelconque des revendications précédentes, caractérisé en ce qu'on utilise des polyamides dans lesquels la concentration des groupes amino est comprise entre 30 et 450 µEq/g.

10. Procédé selon l'une quelconque des revendications précédentes, caractérisé en ce qu'on utilise des polyamides présentant une proportion numérique de groupes —NHR— terminaux valant au moins 60%, et en particulier de 70 à 95%, de l'ensemble des groupes terminaux.

11. Procédé selon l'une quelconque des revendications précédentes, caractérisé en ce qu'on mélange préalablement un granulat sec de polyamides à un mélange-maître contenant le silane, tout en éliminant l'humidité, on fait fondre ce mélange, on fait réagir le silane et le polyamide, à l'état fondu et en les mélangeant intimement, on soumet le produit réactionnel à un procédé de façonnage et finalement, on soumet le corps moulé à l'action de l'eau ou de l'humidité.

12. Procédé selon l'une quelconque des revendications précédentes, caractérisé en ce qu'on ajoute en continu le silane, à l'état liquide, à la masse fondue de polyamide, en les mélangeant intimement, on fait réagir le silane et le polyamide à l'état fondu, on soumet le produit réactionnel à un procédé de façonnage et finalement, on soumet le corps moulé obtenu à l'action de l'eau ou de l'humidité.

13. Procédé selon l'une quelconque des revendications précédentes, caractérisé en ce qu'on utilise des silanes dans lesquels les restes organiques bivalents Y présentent, comme groupes fonctionnels, des groupes époxy, isocyanate, anhydride d'acide, amino ou ester d'acide carboxylique avec des alcools aromatiques ayant de 6 à 14 atomes de carbone.

14. Procédé selon l'une quelconque des revendications précédentes, caractérisé en ce qu'on utilise des silanes dans lesquels le reste hydrolysable A est formé du groupe —OR, dans lequel R représente un reste (cyclo) (ar)aliphatique ou un reste aliphatique contenant des atomes d'oxygène en fonction éther, en particulier comportant 1 à 12 atomes de carbone.

15. Procédé selon la revendication 14, caractérisé en ce que le reste R est un groupe méthyle ou éthyle.

16. Procédé selon l'une quelconque des revendications précédentes, caractérisé en ce qu'on fabrique des pièces moulées par injection, des tuyaux, des profilés, des gaines pour câbles ou pour fibres optiques.

Fig.1 Zeitdehnlinien gemessen bei 10 N/mm$^2$ und 80°C.

a,b) Lineares Polyamid-12 unvernetzt; c,d) Lineares PA-12 vernetzt,
e,f) einfach verzweigtes PA-12 unvernetzt; g,h) einfach verzweigtes PA-12 vernetzt.

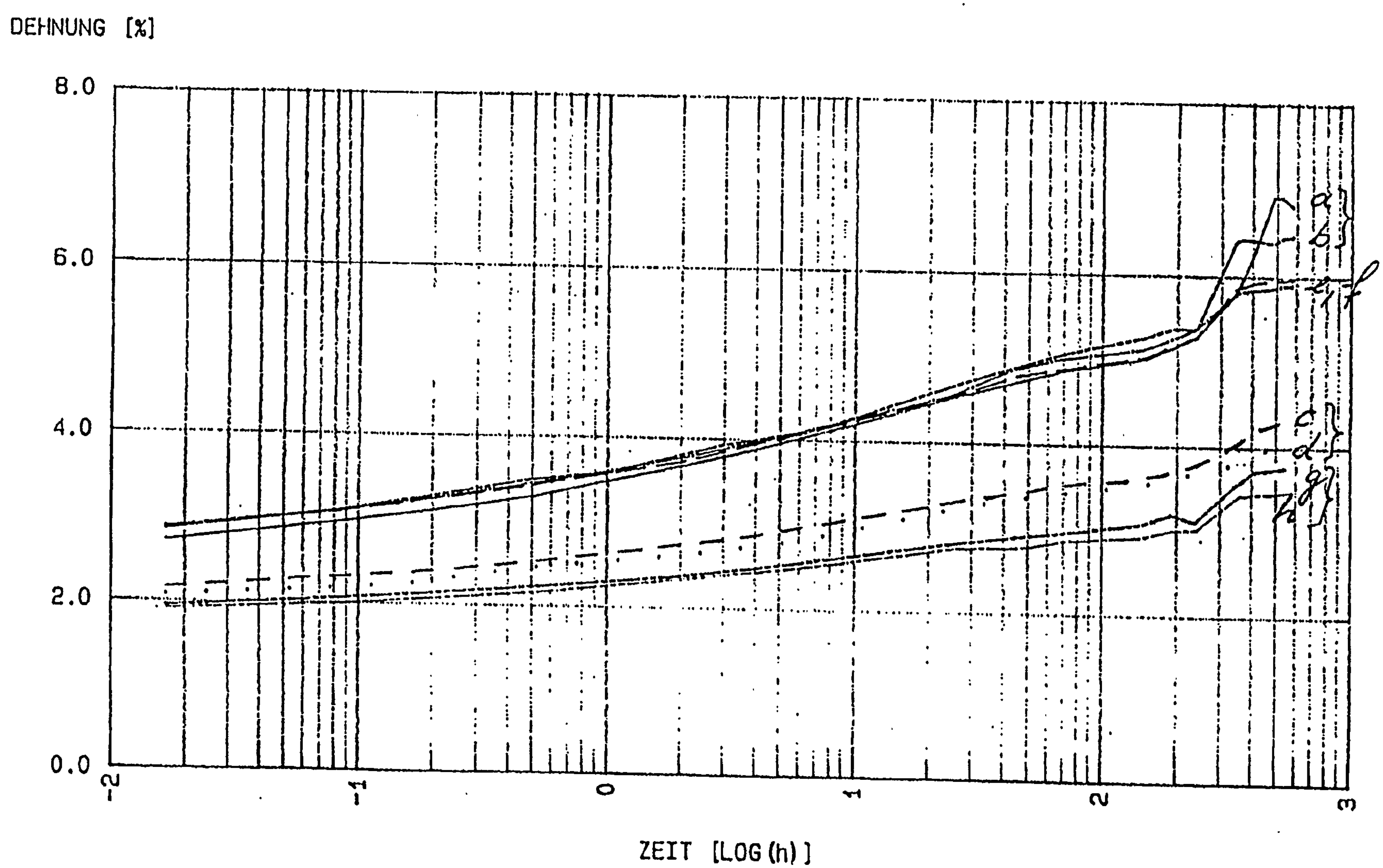

Fig.2 Zeitdehnlinien gemessen bei 10 $N/mm^2$ und 80°C.

i,k) 5-Stern Polyamid-12 unvernetzt; l,m) 5-Stern PA-12 vernetzt.

V1) PA-12 Standardspritzgussmaterial gemessen bei 20°C, zum Vergleich.

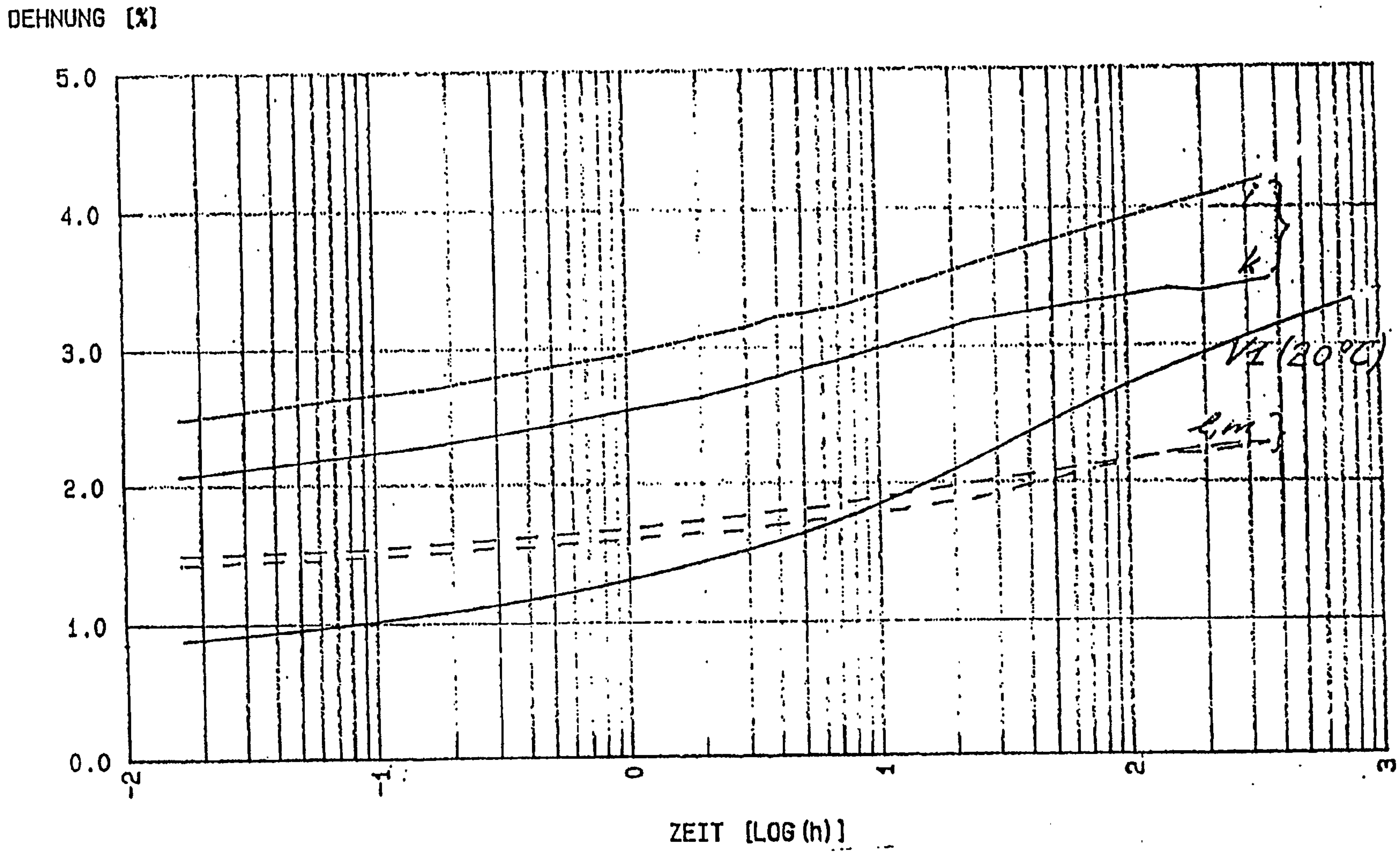

Fig.3

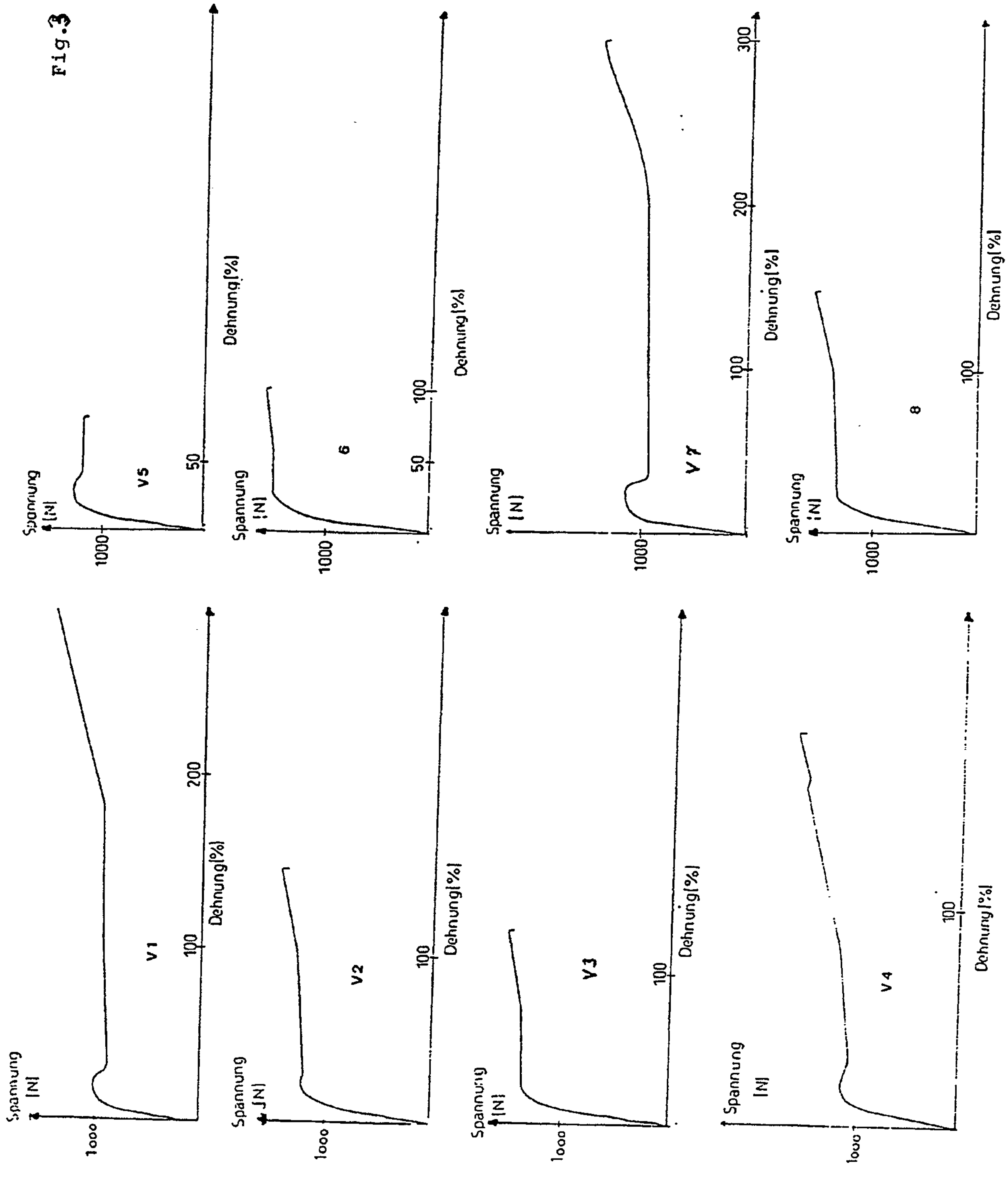

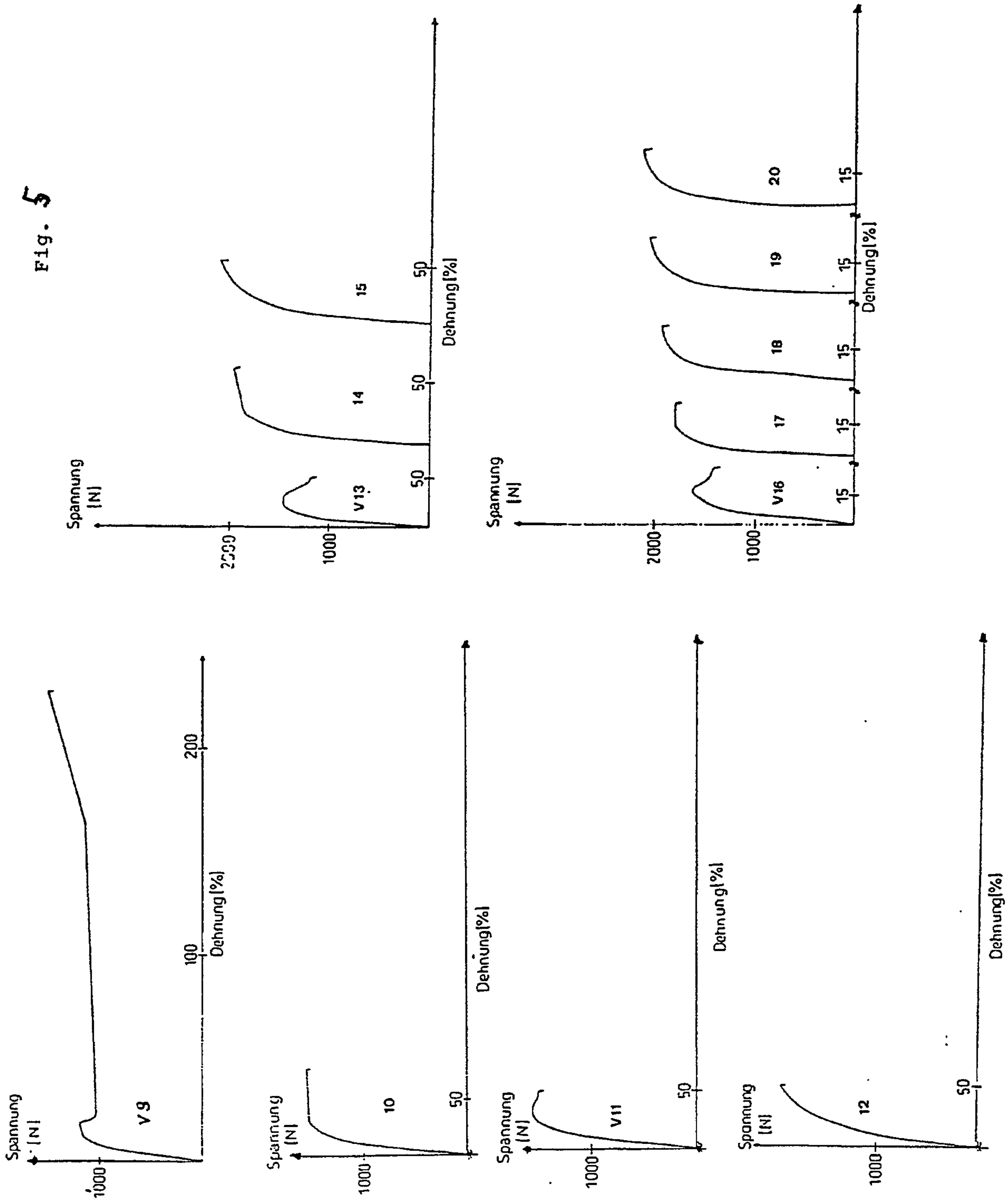
Spannung [N]
Dehnung [%]
1000
2000
50
100
200
15
V9
10
V11
12
V13
14
15
V16
17
18
19
20

Fig. 5

Fig. 4

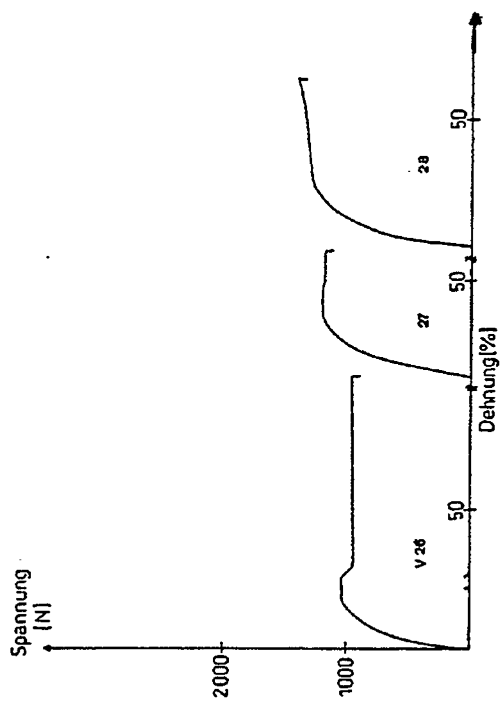
Spannung
[N]
2000
1000
50
50
50
Dehnung [%]
V 26
27
28

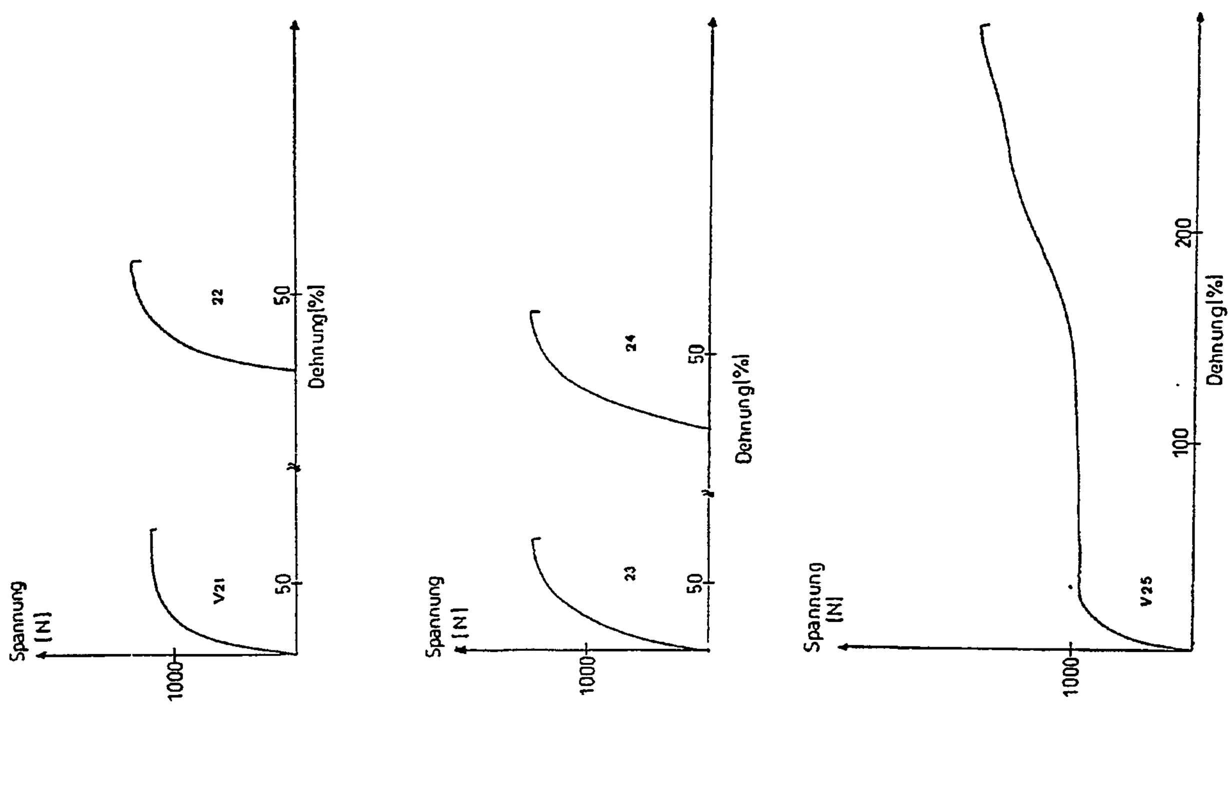
Spannung
[N]
1000
50
50
Dehnung [%]
V21
22
23
24
V25
100
200